# EUROPÄISCHE PATENTSCHRIFT

(11) **EP 2 808 471 B1**
(45) Veröffentlichungstag und Bekanntmachung des Hinweises auf die Patenterteilung: **22.02.2017**
(21) Anmeldenummer: 14168021.5
(22) Anmeldetag: 13.05.2014
(51) Int. Cl.: E05B 79/22, E05B 77/04, E05B 77/44, E05B 79/04, E05B 79/06, B60J 5/00, E05F 11/54

(54) **Moduleinheit zum Öffnen- und Schließen von Flügeln**
Modular unit for opening and closing wings
Unité modulaire destinée à ouvrir et fermer des battants

(30) Priorität: 29.05.2013 DE 102013009112
(43) Veröffentlichungstag der Anmeldung: 03.12.2014
(73) Patentinhaber: Huf Hülsbeck & Fürst GmbH & Co. KG, 42551 Velbert (DE)
(72) Erfinder: Lennhoff, Ralf, 58093 Hagen (DE)

(56) Entgegenhaltungen:
- DE-A1- 2 027 146
- DE-A1-102009 051 536
- DE-B3-102005 022 970

## Beschreibung

Die Erfindung betrifft eine Moduleinheit zum Öffnen- und Schließen von Flügeln, insbesondere von Kraftfahrzeugen, umfassend ein erstes Modul, welches zumindest eine Betätigungseinheit aufweist und ein zweites Modul, welches zumindest eine Schlossbaugruppe aufweist, wobei das erste Modul und das zweite Modul über ein Kopplungsglied miteinander gekoppelt sind, um bei einer Betätigung des ersten Moduls, insbesondere der Betätigungseinheit, ein Schloss der Schlossbaugruppe zu betätigen, um den Öffnungs- und/oder Schließvorgang des Flügels einzuleiten.

Aus dem Stand der Technik sind Kraftfahrzeuge mit als Seitentüren oder Heckklappen ausgebildeten Flügeln bekannt (wie z.B. aus Dokument DE102009051536A1). Um beispielsweise die Seitentüre zu öffnen, muss ein Benutzer einen an einem als Lagerbügel ausgebildeten Träger angeordneten Türgriff ziehen. Wenn der Türgriff gezogen wird, wird über ein Kopplungselement, welches den Türgriff und ein Schloss verbindet, das Schloss betätig, so dass der Öffnungsvorgang eingeleitet wird. Es hat sich gezeigt, dass solche Moduleinheiten unsicher sein können, insbesondere dann, wenn ein unberechtigter Benutzer ein Werkzeug, insbesondere einen Schraubenzieher, in einen Spalt zwischen Scheibe und Türe anordnet. Der unberechtigte Benutzer stütz den Schraubenzieher beispielsweise auf dem Lagerbügel ab und übt mittels eines weiteren Werkzeuges, insbesondere mit einem Hammer, eine Kraft auf den Schraubenzieher aus. Dadurch wird der Lagerbügel in Richtung Bodenebene bewegt und folglich auch das Kopplungselement, welches dem Lagerbügel zugeordnet ist. Das Schloss bleibt relativ zum Lagerbügel in einem bewegungsfreien Zustand, so dass das mit dem Schloss in Wirkverbindung stehende Kopplungselement das Schloss betätigt und somit den Öffnungsvorgang einleitet. Im Ergebnis wird die Tür geöffnet und der unberechtigte Benutzer hat freien Zugang zum Fahrzeug.

Des Weiteren wird beim einem Crash des Kraftfahrzeugs in einem ungünstigen Fall die Schlossbaugruppe relativ zum Türgriff verschoben, so dass es ebenfalls zur einer ungewollten Betätigung des Schlosses durch das Kopplungsglied kommen kann. Daher liegt der Erfindung die Aufgabe zugrunde, die Diebstahlsicherheit und Crashsicherheit einer Moduleinheit zum Öffnen- und Schließen von Flügeln mit einfachen konstruktiven und kostengünstigen Mitteln zu verbessern.

Die Aufgabe wird dadurch gelöst, dass zwischen dem ersten Modul und dem zweiten Modul ein zusätzliches Verbindungselement angeordnet ist, wobei durch das Verbindungselement der Abstand zwischen den Modulen zueinander beim Einwirken einer Kraft F auf mindestens eines der Module im Wesentlichen konstant bleibt. Wenn ein Dieb mit einem Werkzeug, wie beispielsweise einem Schraubenzieher, in den Spalt zwischen Türblech und Scheibe gelangt, kann er mit der Schraubenzieherspitze das erste Modul berühren. In einem folgenden Schritt schlägt er mit einem Hammer auf den Schraubenzieher. Dabei ist eine Bewegung des ersten Moduls ausgeschlossen, weil das Verbindungselement sich an dem zweiten Modul abstützt. Folglich bleibt auch das Kopplungsglied, welches die Schlossbaugruppe, insbesondere das Schloss verbindet, in einem im Wesentlichen bewegungslosen Zustand. Im Falle eines fehlenden Verbindungselements würden sich das erste Modul und das Kopplungsglied relativ zum zweiten Modul bewegen, wobei das zweite Modul unbeweglich an seiner Position verbleiben könnte. Die Bewegung des Kopplungsglieds führt dann zu einer Auslösung des Schlosses, weil der Abstand zwischen dem ersten Modul und dem zweiten Modul sich verändert. Das Verbindungselement verhindert in vorteilhafterweise, dass zwischen dem ersten Modul und dem zweiten Modul eine Relativbewegung stattfindet, welche zu einer Betätigung des Schlosses durch das Kopplungsglied führt. Es ist in Abhängigkeit der Konstruktion ebenfalls denkbar, dass der Dieb das zweite Modul mittels der Werkzeuge in Bewegung versetzt, und somit versucht das Schloss zu betätigen. Dann stützt sich das zweite Modul mittels des Verbindungselements an dem ersten Modul ab, so dass im Wesentlichen eine Relativbewegung der beiden Module zueinander ebenfalls ausgeschlossen ist.

Des Weiteren wird durch die erfindungsgemäße Lösung zusätzlich bei einem Crash sichergestellt, dass durch das zusätzliche Verbindungselement der Abstand zwischen den Modulen im Wesentlichen konstant bleibt, weil das zusätzliche Verbindungselement die beiden Module miteinander fest verbindet. Grundsätzlich kann sich in einem ungünstigen Fall bei einem Crash das zweite Modul, insbesondere das Schloss in Bewegung versetzen. Allerdings stützen sich die beiden Module in Abhängigkeit der Richtung des Crashs über das Verbindungselement ab, so dass eine Betätigung des Schlosses ausbleibt.

Die Sicherheit der Moduleinheit zum Öffnen- und Schließen von Flügeln wird deutlich verbessert. Des Weiteren zeichnet sich die erfindungsgemäße Moduleinheit durch eine kostengünstige und einfache Konstruktion aus, die auch bei bereits bestehenden Moduleinheiten nachträglich im Rahmen einer Nachrüstung eingebaut werden kann. Es muss mittels eines Verbindungselements eine Verbindung zwischen dem ersten Modul und dem zweiten Modul bereitgestellt werden.

Nach einer weiteren bevorzugten Ausführungsform ist vorgesehen, dass das erste Modul einen Träger zur Aufnahme eines Schließzylinders und zur Lagerung der Betätigungseinheit, insbesondere eines als Betätigungseinheit ausgebildeten Türgriffs, umfasst. Mittels des Trägers kann die Betätigungseinheit an einer Türkonstruktion sicher und einfach befestigt werden.

Um die Diebstahlsicherheit weiter zu erhöhen ist vorgesehen, dass der Träger und/oder der Schließzylinder zumindest teilweise von einem Abdeckelement umgeben ist. Ferner dient der Träger ebenfalls dazu, das Verbindungselement sicher zu befestigen.

Sehr einfach und kostengünstig ist die Konstruktion, wenn das Verbindungselement an dem Träger und/oder an dem Abdeckelement stoffschlüssig und/oder formschlüssig und/oder kraftschlüssig befestigt ist.

Um die Diebstahlsicherheit zu erhöhen, ist vorgesehen, dass das Verbindungselement das erste Modul und das zweite Modul miteinander verbindet. Insbesondere dann, wenn das erste Modul zu dem zweiten Modul beanstandet zueinander angeordnet sind, kann die auf das eine Modul wirkende Kraft auf das andere Modul übertragen werden.

Der Herstellungsprozess und die Montage der Module werden vereinfacht, wenn das Verbindungselement einteilig mit dem Träger oder dem Abdeckelement ausgebildet ist. Somit kann auf einen zusätzlichen Arbeitsschritt, der das Befestigen des Verbindungselements an einem der Module erfordert, verzichtet werden. Dadurch wird der Fertigungsprozess beschleunigt und folglich auch kostengünstiger.

Um die Montage des Verbindungselements zu vereinfachen, ist vorgesehen, dass der Träger oder das Abdeckelement eine Öffnung aufweist, in welcher das Verbindungselement angeordnet ist, insbesondere gelagert ist.

Um bei dem zuvor beschriebenen Diebstahl ein Auslösen des Schlosses zu verhindern, ist vorgesehen, dass das Verbindungselement an der Schlossbaugruppe, insbesondere an einem Gehäuse des Schlosses befestigt ist. Somit wirkt die auf das erste Modul ausgeübte Kraft direkt auf das Schlossgehäuse, so dass eine Betätigung des Schlosses verhindert wird. Im Ergebnis bleibt dem Dieb der Zugang zum Fahrzeug verwehrt.

Das Verbindungselement kann sicher gelagert werden, wenn das Gehäuse der Schlossbaugruppe eine Öffnung aufweist, welche zur Aufnahme des Verbindungselements dient. Dabei wird das Verbindungselement beispielsweise in die Öffnung eingehakt oder verklipst. Somit wird verhindert, dass auch hohe auf das Verbindungselement wirkende Kräfte ein Abreißen des Verbindungselements von der Schlossgruppe bewirken.

Die Moduleinheit weist einen kompakten konstruktiven Aufbau auf, wenn das Verbindungselement als Abstützstange ausgebildet ist. Hierbei kann vorgesehen sein, dass die Abstützstange aus Metall, insbesondere aus Edelstahl ausgebildet ist. Der Durchmesser des Querschnitts der Stange sollte so gewählt werden, dass auch bei hohen Kräften ein Brechen der Abstützstange ausgeschlossen ist. Es ist ebenfalls sehr vorteilhaft, wenn der Durchmesser des Querschnitts der Abstützstange genauso ausgebildet ist, wie der Durchmesser des Querschnitts des Kopplungsglieds. In diesem Fall reicht dann ein einziges Werkzeug aus, um Stangen herzustellen, die in einem weiteren Arbeitsprozess zu einer Abstützstange und zu einem Kopplungsglied geformt werden können.

Die Moduleinheit ist sehr sicher gegen das ungewollte Öffnen durch einen Dieb oder einen Crash geschützt, wenn das Kopplungsglied als Bowdenzug oder als Stange ausgebildet ist.

Die Erfindung wird anhand der nachfolgenden Beschreibung und den Figuren näher beschrieben. Die Figuren zeigen:

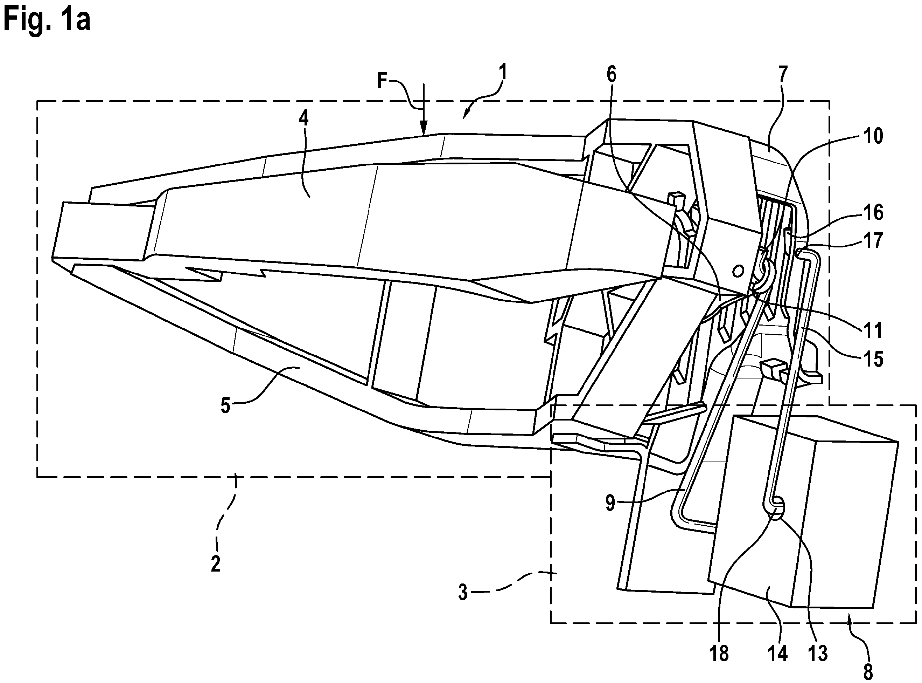

- Figur 1a: eine erfindungsgemäße Moduleinheit in einer perspektivischen Ansicht von vorne gemäß einem ersten Ausführungsbeispiel,

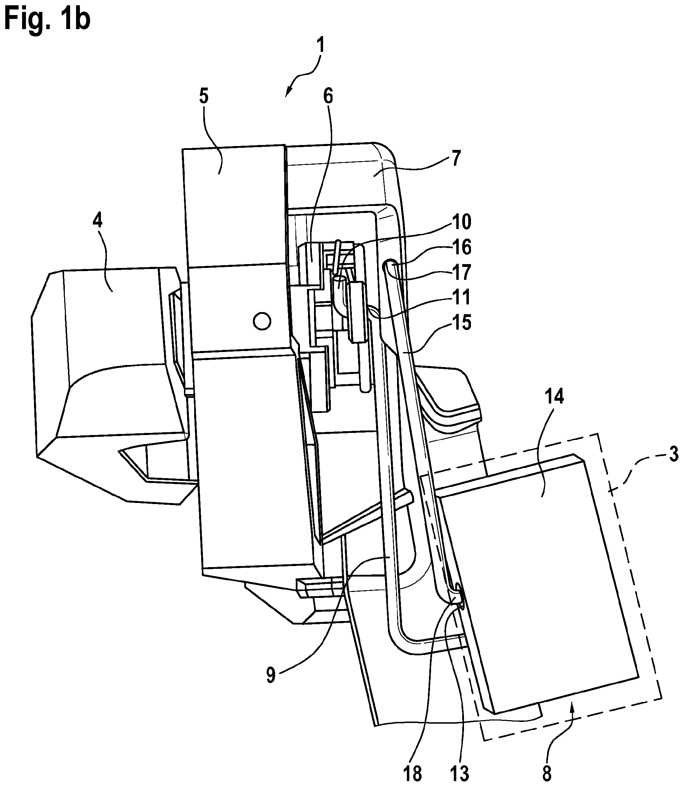

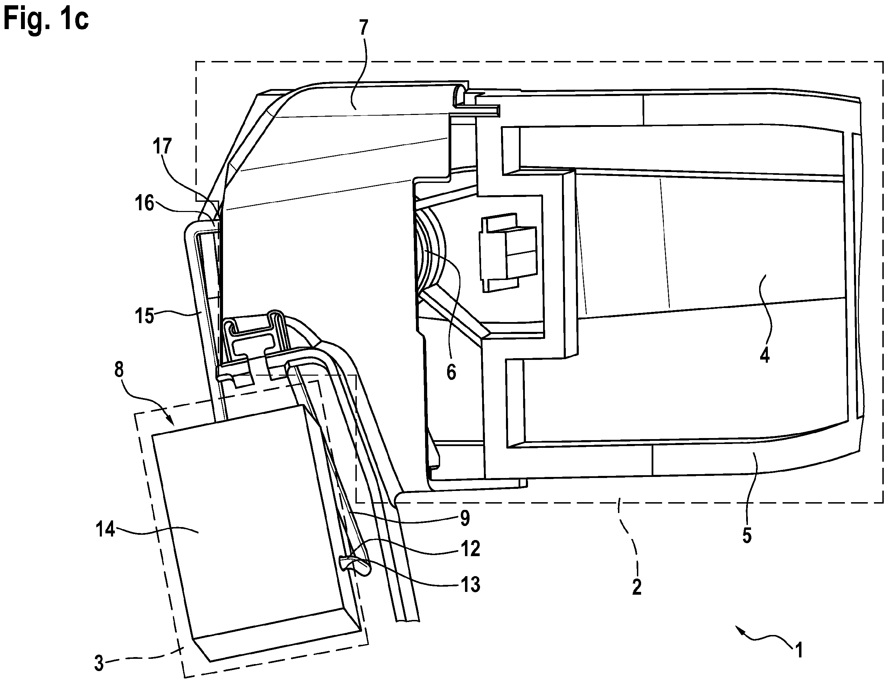

- Figur 1 b: die erfindungsgemäße Moduleinheit in der Seitenansicht gemäß dem ersten Ausführungsbeispiel,
- Figur 1 c: einen Ausschnitt der erfindungsgemäßen Moduleinheit in der Ansicht von hinten gemäß dem ersten Ausführungsbeispiel,
- Figur 2a: eine erfindungsgemäße Moduleinheit in einer perspektivischen Ansicht von vorne gemäß einem zweiten Ausführungsbeispiel,
- Figur 2b: die erfindungsgemäße Moduleinheit in der Seitenansicht gemäß dem zweiten Ausführungsbeispiel, und
- Figur 2c: einen Ausschnitt der erfindungsgemäßen Moduleinheit in der Ansicht von hinten gemäß dem zweiten Ausführungsbeispiel.

In den Figuren 1a, 1b und 1c ist eine erste Ausführungsform der erfindungsgemäßen Moduleinheit 1 zum Öffnen- und Schließen von Flügeln dargestellt. Bei den nicht näher gezeigten Flügeln handelt es sich unter anderem um Türen oder Heckklappen von Kraftfahrzeugen. Die Moduleinheit 1 umfasst ein erstes Modul 2 und ein zweites Modul 3. Das erste Modul 2 weist mindestens eine als Handhabe, insbesondere als Türgriff, ausgebildete Betätigungseinheit 4 auf, welche von einem Benutzer gezogen werden kann, um den Öffnungsvorgang einzuleiten. Die Betätigungseinheit 4 ist an einem als Träger 5 ausgebildeten Lagerbügel angeordnet, welcher beispielsweise an einem Karosserieblech einer Tür befestigt werden kann. Die Betätigungseinheit 4 ist mit einem Hebel 6 verbunden, der beim Betätigen der Betätigungseinheit 4 mittels eines nicht näher visualisierten Umlenkhebels, welcher die Betätigungseinheit 4 mit dem Hebel 6 mechanisch koppelt, bewegt wird. Der Hebel 6 kann ebenfalls über einen nicht näher dargestellten rotatorisch bewegbaren Schließzylinder in Bewegung versetzt werden. Dabei ist der Schließzylinder mechanisch mit dem Hebel 6 gekoppelt. Der Schließzylinder, der Hebel 6 und der Lagerbügel 5 sind teilweise von einem Abdeckelement 7 umgeben.

Das zweite Modul 3 umfasst eine Schlossbaugruppe 9 aufweisend ein Schloss, welches mindestens mit einer nicht näher gezeigten Drehfalle und Sperrklinke versehen ist. Das erste Modul 2 und das zweite Modul 3 sind mit einem als Stange, alternativ als Bowdenzug, ausgebildeten Kopplungsglied 9 miteinander mechanisch verbunden, wobei das Kopplungsglied 9 mit seinem ersten Ende 10 in einer als Öffnung 11 ausgebildeten Öse an dem Hebel 6 befestigt ist und mit seinem zweiten Ende 12 durch eine als Durchgangsöffnung ausgebildeten Öffnung 13 eines Gehäuses 14 der Schlossbaugruppe 7 geführt wird. Innerhalb des Gehäuses 14 der Schlossbaugruppe 7 ist das Kopplungsglied 9 mit Komponenten des Schlosses, insbesondere mit der Drehfalle mechanisch gekoppelt. Bei einer Betätigung der Handhabe wird das Schloss über das Kopplungsglied 8 betätigt und es wird der Öffnungsvorgang eingeleitet.

Gemäß dem ersten Ausführungsbeispiel ist zwischen dem ersten Modul 2 und dem zweiten Modul 3 ein zusätzliches als Abstützstange ausgebildetes Verbindungselement 15 angeordnet, wobei durch das Verbindungselement 15 der Abstand zwischen den Modulen zueinander beim Einwirken einer Kraft F auf mindestens eines der Module 2, 3 im Wesentlichen konstant bleibt. Dabei ist das Verbindungselement 15 mit dem Abdeckelement 7 formschlüssig verbunden, indem ein erstes Ende 16 des Verbindungselements in eine als Durchgangsöffnung oder als Loch ausgebildete Öffnung 17 des Abdeckelements 7 eingehakt wird. Es ist ebenfalls denkbar das Verbindungselement 15 stoffschlüssig oder kraftschlüssig mit dem Abdeckelement 7 zu verbinden. Dementsprechend weist das Abdeckelement 7 zwei Funktionen auf. Zum Einem sorgt es dafür, den Diebstahlschutz zu verbessern, weil der Dieb zum Betätigen des Hebels 6 das Abdeckelement 7 entfernen muss. Zum Anderen dient es dazu, das zusätzliche Verbindungselement 15 an dem Abdeckelement 15 zu befestigen. Dabei sollte darauf geachtet werden, dass das Verbindungselement 15 an einer Position des Abdeckelements 7 angeordnet wird, welche nicht oder nur sehr schwer unter Zugrundelegung eines erheblichen Zeitaufwands zugänglich für einen Dieb ist. Dies ist beispielsweise der Fall, wenn das Verbindungselement 15 seitlich an dem Abdeckelement 7 befestigt ist, wie es in der Figur 1 a und 1 b gezeigt ist.

Das zweite Ende 18 des Verbindungselements 15 wird in mit dem Gehäuse 14 der Schlossbaugruppe 8 formschlüssig verbunden, indem es in eine als Durchgangsloch ausgebildete Öffnung 13 des Gehäuses 14 der Schlossbaugruppe 8 eingehakt wird. Es ist ebenfalls möglich, das zweite Ende 18 des Verbindungselements 15 kraftschlüssig oder stoffschlüssig mit dem Gehäuse 14 der Schlossbaugruppe 8 zu verbinden. So kann beispielsweise das Verbindungselement 15 aus einem metallischen Werkstoff ausgebildet sein, welches dann mit einem aus Metall ausgebildeten Gehäuse 14 der Schlossbaugruppe 8 verschweißt wird.

Im Ergebnis ist mittels des Verbindungselements 15 das erste Modul 2 und das zweite Modul 3 miteinander fest verbunden.

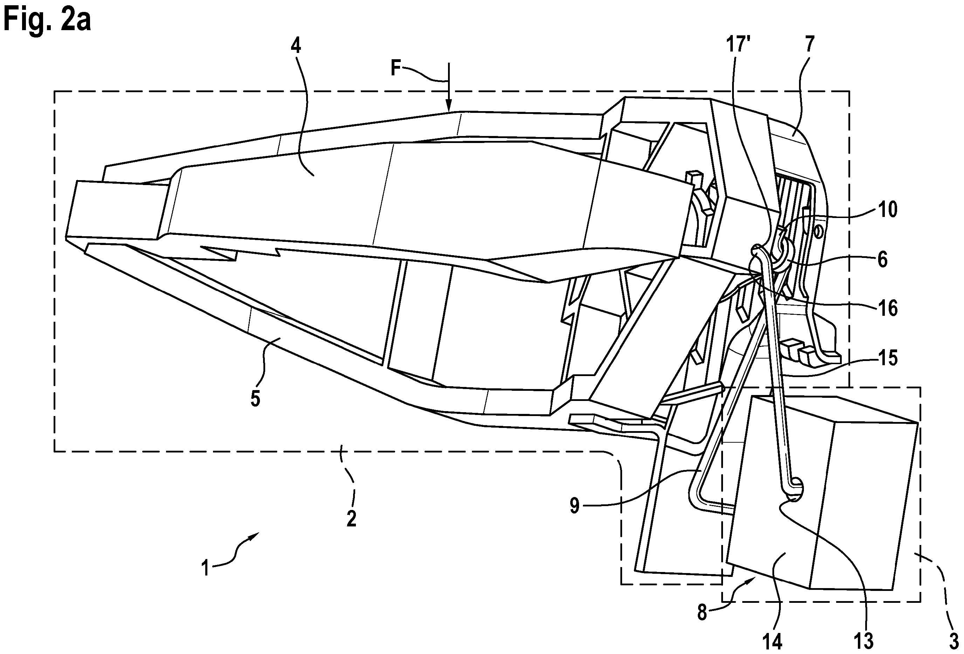

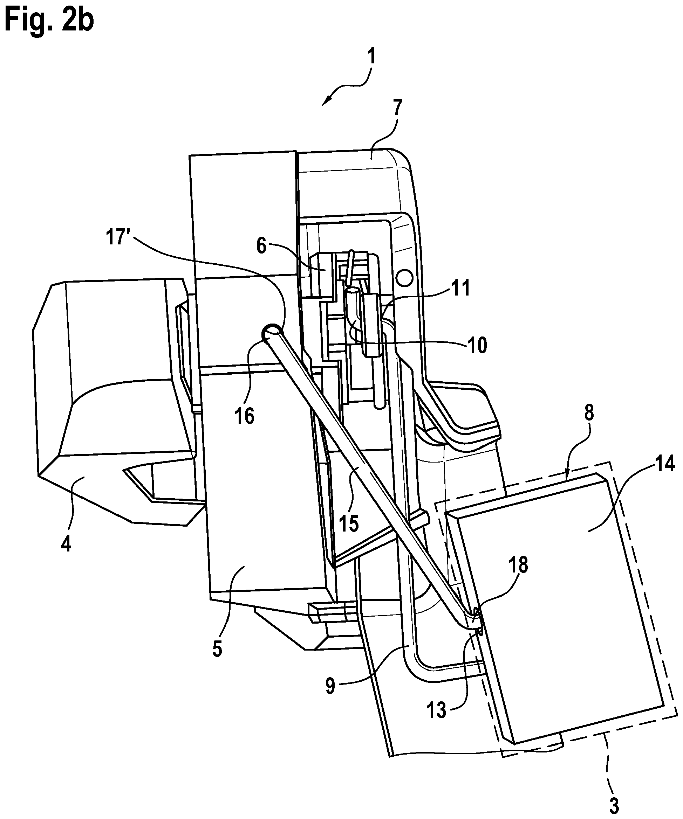

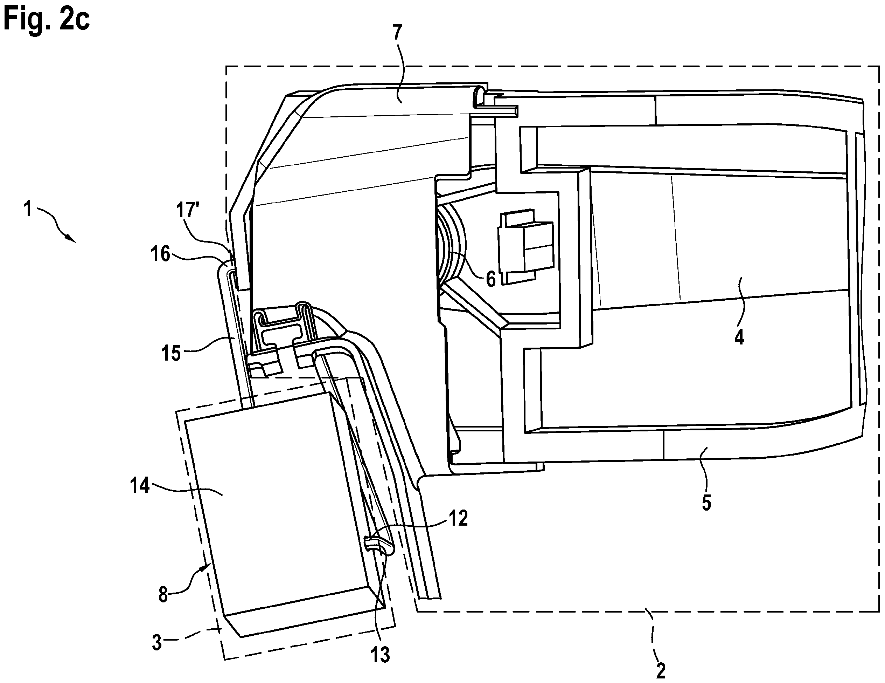

In den Figuren 2a bis 2c ist eine zweite Ausführungsform der erfindungsgemäßen Moduleinheit 1 dargestellt. Es werden für Bauteile im zweiten Ausführungsbeispiel, die bereits im ersten Ausführungsbeispiel beschrieben sind, dieselben Bezugsziffern verwendet wie im ersten Ausführungsbeispiel. Neue Bauteile im zweiten Ausführungsbeispiel erhalten neue Bezugsziffern.

Die zweite Ausführungsform unterscheidet sich von der ersten Ausführungsform dadurch, dass das Verbindungselement 15 mit dem Träger 5 formschlüssig verbunden ist. Dabei weist der Träger eine als Durchgangsloch ausgebildete Öffnung 17' auf, in welcher das erste Ende 16 des Verbindungselements 15 angeordnet ist, insbesondere eingehakt ist. Auch im zweiten Ausführungsbeispiel kann das Verbindungselement 15 alternativ stoffschlüssig oder kraftschlüssig mit dem Träger 5 verbunden werden. Wie bereits im ersten Ausführungsbeispiel beschrieben ist, muss auch im zweiten Ausführungsbeispiel das Verbindungselement 15 an einer für einen Dieb unzugänglichen Position befestigt werden. Deshalb ist das Verbindungselement 15 seitlich an dem Träger 5 angeordnet.

Im Folgenden wird die Funktionsweise des Verbindungselements 15 näher erläutert. Wie bereits oben beschrieben, wirkt das Verbindungselement 15 zur Abstützung des ersten Moduls 2 auf dem zweiten Modul 3. Wirkt nun eine Kraft F auf das erste Modul 2, so verhindert das Verbindungselement 15, dass sich das erste Modul 2 dem zweiten Modul 3 annähert. Der Abstand zwischen den beiden Modulen 2, 3 bleibt im Wesentlichen konstant. Somit wird verhindert, dass das Kopplungsglied 9 sich bewegt und das Schloss ungewollt betätigt wird, um den Öffnungsvorgang des Flügels einzuleiten. Die Kraft F kann beispielsweise durch einen Crash hervorgerufen werden. Somit wird durch das Verbindungselement 15 in vorteilhafterweise verhindert, dass sich bei einem Crash die Flügel öffnen. Die Sicherheit für die in dem Fahrzeug befindlichen Insassen wird deshalb erheblich verbessert.

Zusätzlich wird noch die Diebstahlsicherheit erhöht. Wenn ein Dieb sich einen Zugang zum Fahrzeug verschaffen möchte, könnte er mit einem Werkzeug versuchen, den Träger 5 relativ zur Schlossbaugruppe 8 in Bewegung zu versetzen. Mit Hilfe eines Schraubenziehers gelangt der Dieb in einen Spalt zwischen Türblech und Scheibe und kann mit der Schraubenzieherspitze das erste Modul 2, insbesondere den Träger 5 oder das Abdeckelement 7 berühren. In einem weiteren Schritt schlägt der Dieb mit einem Hammer auf den Schraubenzieher. Dabei ist eine Bewegung des ersten Moduls 2, insbesondere des Trägers 5 bzw. des Abdeckelements 7 ausgeschlossen, weil sich das erste Modul 2 mit Hilfe des Verbindungselements 15 an dem zweiten Modul 3 abstützt. Folglich bleibt auch das Kopplungsglied 9, welches die Schlossbaugruppe 8, insbesondere das Schloss verbindet, in einem im Wesentlichen bewegungslosen Zustand. Eine Relativbewegung zwischen den beiden Modulen 2, 3 wird somit durch das Verbindungselement 15 in vorteilhafterweise ausgeschlossen.

Es sind ebenfalls andere Ausführungsformen möglich. So kann beispielsweise das Verbindungselement 15 einteilig mit dem Träger 5 oder mit dem Abdeckelement 7 ausgebildet sein. Dann würde sich der Träger 5 oder das Abdeckelement 7 direkt auf dem zweiten Modul 3 abstützen. Es könnten selbstverständlich auch mehrere Verbindungselemente 15 verwendet werden, um die beiden Module 2, 3 miteinander zu verbinden. So ist folglich auch eine Ausführungsform möglich, welche die Lehre aus dem ersten und zweiten Ausführungsbeispiel kombiniert. So kann ein erstes Verbindungselement die Schlossbaugruppe 8 mit dem Träger 5 verbinden und zusätzlich ein zweites Verbindungselement das Abdeckelement 7 mit der Schlossbaugruppe 8 verbinden. Somit wird die Abstützung des ersten Moduls 2 auf dem zweiten Modul 3 weiter verbessert bzw. stabilisiert, so dass noch höhere Kräfte auf das erste Modul 2 bzw. zweite Modul 3 wirken können.

### Bezugszeichenliste

- 1: Moduleinheit
- 2: erstes Modul
- 3: zweites Modul
- 4: Betätigungseinheit
- 5: Träger
- 6: Hebel
- 7: Abdeckelement
- 8: Schlossbaugruppe
- 9: Kopplungsglied
- 10: erstes Ende des Kopplungsglieds
- 11: Öffnung des Hebels
- 12: zweites Ende des Kopplungsglieds
- 13: Öffnung des Gehäuses der Schlossbaugruppe
- 14: Gehäuse der Schlossbaugruppe
- 15: Verbindungselement
- 16: erstes Ende des Verbindungselements
- 17: Öffnung des Abdeckelements
- 17': Öffnung des Trägers
- 18: zweites Ende des Verbindungselements
- F: Kraft

## Patentansprüche

1. Moduleinheit (1) zum Öffnen- und Schließen von Flügeln, insbesondere von Kraftfahrzeugen, umfassend ein erstes Modul (2), welches zumindest eine Betätigungseinheit (4) aufweist und ein zweites Modul (3), welches zumindest eine Schlossbaugruppe (8) aufweist, wobei das erste Modul (2) und das zweite Modul (3) über ein Kopplungsglied (9) miteinander gekoppelt sind, um bei einer Betätigung des ersten Moduls (2), insbesondere der Betätigungseinheit (4), ein Schloss der Schlossbaugruppe (8) zu betätigen, um den Öffnungs- und/oder Schließvorgang des Flügels einzuleiten, **dadurch gekennzeichnet, dass** zwischen dem ersten Modul (2) und dem zweiten Modul (3) ein zusätzliches Verbindungselement (15) angeordnet ist, wobei durch das Verbindungselement (15) der Abstand zwischen den Modulen (2, 3) zueinander beim Einwirken einer Kraft F auf mindestens eines der Module (2, 3) im Wesentlichen konstant bleibt.

2. Moduleinheit (1) nach Anspruch 1, **dadurch gekennzeichnet, dass** das erste Modul (2) einen Träger (5) zur Aufnahme eines Schließzylinders und zur Lagerung der Betätigungseinheit (4), insbesondere eines als Betätigungseinheit (4) ausgebildeten Türgriffs, umfasst.

3. Moduleinheit (1) nach Anspruch 2, **dadurch gekennzeichnet, dass** der Träger (5) und/oder der Schließzylinder zumindest teilweise von einem Abdeckelement (7) umgeben ist.

4. Moduleinheit (1) nach einem der Ansprüche 1 bis 3, **dadurch gekennzeichnet, dass** das Verbindungselement (15) an dem Träger (5) und/oder an dem Abdeckelement (7) stoffschlüssig und/oder formschlüssig und/oder kraftschlüssig befestigt ist.

5. Moduleinheit (1) nach einem der Ansprüche 1 bis 4, **dadurch gekennzeichnet, dass** das Verbindungselement (15) das erste Modul (2) und das zweite Modul (3) miteinander verbindet.

6. Moduleinheit (1) nach einem der Ansprüche 1 bis 5, **dadurch gekennzeichnet, dass** das Verbindungselement (15) einteilig mit dem Träger (5) oder dem Abdeckelement (7) ausgebildet ist.

7. Moduleinheit (1) nach einem der Ansprüche 1 bis 6, **dadurch gekennzeichnet, dass** der Träger (5) oder das Abdeckelement (7) eine Öffnung (17, 17') aufweist, in welcher das Verbindungselement (15) angeordnet ist, insbesondere gelagert ist.

8. Moduleinheit (1) nach einem der Ansprüche 1 bis 7, **dadurch gekennzeichnet, dass** das Verbindungselement (15) an der Schlossbaugruppe (8), insbesondere an einem Gehäuse (14) des Schlosses befestigt ist.

9. Moduleinheit (1) nach einem der Ansprüche 1 bis 8, **dadurch gekennzeichnet, dass** das Gehäuse (14) der Schlossbaugruppe (8) eine Öffnung (13) aufweist, welche zur Aufnahme des Verbindungselements (15) dient.

10. Moduleinheit (1) nach einem der Ansprüche 1 bis 9, **dadurch gekennzeichnet, dass** das Verbindungselement (15) als Abstützstange ausgebildet ist.

11. Moduleinheit (1) nach einem der Ansprüche 1 bis 10, **dadurch gekennzeichnet, dass** das Kopplungsglied (9) als Bowdenzug oder als Stange ausgebildet ist.

## Claims

1. A module unit (1) for the opening and closing of wings, in particular of motor vehicles, comprising a first module (2) comprising at least one actuating unit (4) and a second module (3) comprising at least one lock assembly (8), wherein the first module (2) and the second module (3) are coupled to each other via a coupling member (9), in order to, for an actuation of a first module (2), in particular the actuating unit (4), actuate a lock of the lock assembly (8) for initiating the opening and/or closing procedure, **characterised in that** an additional connecting element (15) is arranged between the first module (2) and the second module (3), wherein due to the connecting element (15) the distance between the modules (2, 3) remains substantially constant when a force F is acting upon at least one of the modules (2, 3).

2. The module unit (1) according to claim 1, **characterised in that** the first module (2) comprises a carrier (5) for receiving a locking cylinder and for supporting the actuating unit (4), in particular a door handle configured as the actuating unit (4).

3. The module unit (1) according to claim 2, **characterised in that** the carrier (5) and/or the locking cylinder is surrounded at least partially by a covering element (7).

4. The module unit (1) according to one of claims 1 to 3, **characterised in that** the connecting element (15) is attached to the carrier (5) and/or to the covering element (7) so as to form a material lock and/or a form lock and/or a force lock.

5. The module unit (1) according to one of claims 1 to 4, **characterised in that** the connecting element (15) connects the first module (2) and the second module (3) with each other.

6. The module unit (1) according to one of claims 1 to 5, **characterised in that** the connecting element (15) is formed in one piece with the carrier (5) or the covering element (7).

7. The module unit (1) according to one of claims 1 to 6, **characterised in that** the carrier (5) or the covering element (7) comprises an opening (17, 17'), in which the connecting element (15) is disposed, in particular mounted.

8. The module unit (1) according to one of claims 1 to 7, **characterised in that** the connecting element (15) is attached to the lock assembly (8), in particular to a housing (14) of the lock.

9. The module unit (1) according to one of claims 1 to 8, **characterised in that** the housing (14) of the lock assembly (8) comprises an opening (13), which serves to receive the connecting element (15).

10. The module unit (1) according to one of claims 1 to 9, **characterised in that** the connecting element (15) is configured as a supporting bar.

11. The module unit (1) according to one of claims 1 to 10, **characterised in that** the coupling member (9) is configured as a Bowden cable or as a bar.

## Revendications

1. Unité modulaire (1) destinée à ouvrir et à fermer des ailes, notamment de véhicules automobiles, comprenant un premier module (2), lequel comporte au moins une unité de manoeuvre (4) et un deuxième module (3), lequel comporte au moins un ensemble formant serrure (8), le premier module (2) et le deuxième module (3) étant couplés l'un à l'autre par l'intermédiaire d'un organe de couplage (9), pour manoeuvrer, lors d'un manoeuvre du premier module (2), notamment de l'unité de manoeuvre (4) une serrure de l'ensemble formant serrure (8), pour introduire le processus d'ouverture et/ou de fermeture de l'aile, **caractérisée en ce qu'**entre le premier module (2) et le deuxième module (3) est placé un élément d'assemblage (15) supplémentaire, grâce à l'élément d'assemblage (15), l'écart mutuel entre les modules (2, 3) restant sensiblement constant, lors de l'action d'une force F sur au moins l'un des modules (2, 3).

2. Unité modulaire (1) selon la revendication 1, **caractérisée en ce que** le premier module (2) comprend un support (5) destiné à recevoir un barillet de serrure et à loger l'unité de manoeuvre (4), notamment une poignée de portière conçue en tant qu'unité de manoeuvre (4).

3. Unité modulaire (1) selon la revendication 2, **caractérisée en ce que** le support (5) et ou le barillet de serrure est entouré au moins en partie par un élément de recouvrement (7).

4. Unité modulaire (1) selon l'une quelconque des revendications 1 à 3, **caractérisé en ce que** l'élément d'assemblage (15) est fixé par matière et/ou par complémentarité de forme et/ou par complémentarité de force sur le support (5) et/ou sur l'élément de recouvrement (7).

5. Unité modulaire (1) selon l'une quelconque des revendications 1 à 4, **caractérisé en ce que** l'élément d'assemblage (15) assemble entre eux le premier module (2) et le deuxième module (3).

6. Unité modulaire (1) selon l'une quelconque des revendications 1 à 5, **caractérisée en ce que** l'élément d'assemblage (15) est conçue en monobloc avec le support (5) et ou l'élément de recouvrement (7).

7. Unité modulaire (1) selon l'une quelconque des revendications 1 à 6, **caractérisée en ce que** le support (5) et/ou l'élément de recouvrement (7) comportent un orifice (17, 17') dans lequel l'élément d'assemblage (15) est placé, notamment logé.

8. Unité modulaire (1) selon l'une quelconque des revendications 1 à 7, **caractérisée en ce que** l'élément d'assemblage (15) est fixé sur l'ensemble formant serrure (8), notamment sur un boîtier (14) de la serrure.

9. Unité modulaire (1) selon l'une quelconque des revendications 1 à 8, **caractérisée en ce que** le boîtier (14) de l'ensemble formant serrure (8) comporte un orifice (13) qui sert à recevoir l'élément d'assemblage (15).

10. Unité modulaire (1) selon l'une quelconque des revendications 1 à 9, **caractérisée en ce que** l'élément d'assemblage (15) est conçu en tant que tige d'appui.

11. Unité modulaire (1) selon l'une quelconque des revendications 1 à 10, **caractérisée en ce que** l'organe de couplage (9) est conçu en tant que câble Bowden ou en tant que tige.
